# EUROPEAN PATENT APPLICATION

(11) **EP 0 678 574 A2**
(43) Date of publication of application: **25.10.1995**
(21) Application number: 95302530.1
(22) Date of filing: 18.04.1995
(51) Int. Cl.: C12C 11/00, C12G 1/036

(54) **Package for home brewing**

(30) Priority: 19.04.1994 GB 9407694; 09.03.1995 GB 9504746
(71) Applicant: CONTINENTAL WINE EXPERTS LTD., Norwich Norfolk NR10 4BQ (GB)
(72) Inventor: Gale, Raymond George, Norwich, Norfolk NR10 4BQ (GB)
(74) Representative: Jones, William

(57) **Abstract**

A package for home brewing of an alcoholic beverage which comprises a pouch having therein a preparation to be fermented to provide the alcoholic beverage, said pouch being self-supporting to be free-standing and having, in use, vertical side walls which are substantially sheer.

## Description

### Field of the Invention

The present invention relates to a package for "home brewing" of alcoholic beverages.

### Background to the Invention

The market for home brewing DIY kits has considerably expanded in volume of recent years partly reflecting the improvement in consistency of the beer or wine obtainable from the home brew kits and partly as an economical measure to counter the high prices of off the shelf beers and wines. Home brewing is evolving from a simple hobby into an alternative source of cheap alcoholic beverages.

The traditional equipment for preparation of home brews include large glass vessels known as demijohns within which the grape juice or concentrate or beer concentrate preparation are placed, diluted as necessary, and fermented by addition of yeast for a period of days to weeks or even months. Once fermentation is deemed to be complete an additive is admitted to the demijohn, most normally comprising sodium metabisulphite, which serves to halt further fermentation and to act as a clearing agent to cause sedimentation of the yeast and other particles in colloidal suspension. The beverage is then decanted from the demijohn into wine or beer bottles for subsequent consumption.

Notwithstanding their relatively high cost their high weight and their bulk, demijohns are inconvenient to use in that they must be effectively washed and sterilised prior to use and generally necessitate use of syphons to transfer the beverage to other containers.

A recent advancement in home brewing kits includes the provision of packs which are known as "bag-in-box" packs, comprising a comparatively rigid box housing a flexible bag which contains the requisite preparation for fermentation. To the preparation is added the necessary further ingredients including water and the yeast, whereby fermentation occurs in the bag. The fermentation process is stopped as normal by addition of sodium metabisulphite or equivalent and the contents of the bag are then poured into further receptacles.

It transpires, however, that these bag-in-the-box packs provide an inadequate container for decanting of the beverage due to their construction. The bags are invariably soft and collapsible with a tendency to crease and form ridges and shelves in the sides of the bag that trap sediment and when the container is tilted to pour the beverage therefrom, will disturb that sediment.

Accordingly, it is a general objective of the present invention to overcome this problem and to provide a home brewing pack which is cheap to manufacture and simple and convenient to use.

### Summary of the Invention

According to a first aspect of the present invention there is provided a package for home brewing of an alcoholic beverage which comprises a pouch having therein a preparation to be fermented to provide the alcoholic beverage, said pouch being self supporting to be free standing and having, in use, vertical, side walls which are substantially sheer.

Suitably the pouch is formed of a plastics material or composite and suitably the pouch is formed of two or more webs of such material which are positioned face to face and bonded longitudinally along their lateral edges and with a portion of at least one said web or a separate web extending between the ends of each of the first said webs to provide a base wall to support the two side walls apart and hold the pouch in a self-supporting upright configuration in use.

Preferably the pouch is formed of polyester, and polythene laminate optionally as a triply laminate with aluminium. Most notably in the latter arrangement, it has been found that a shelf life of up to two years is obtained and, furthermore, quite remarkably appears to be unnecessary to place the pouch in an airing cupboard to heat it during the fermentation process.

The pouch is suitably formed with a nozzle toward the upper, in use, end thereof by which means the contents of the pouch may be poured therefrom, the nozzle suitably having a stopper which may be screw threaded to secure it in place.

### Brief Description of the Drawings

A preferred embodiment of the present invention will now be more particularly described by way of example with reference to the accompanying drawings wherein;
Figure 1 is an elevation view of the preferred embodiment from one side;
Figure 2 is a perspective view of the preferred embodiment from the direction of Figure 1 but from below;
Figure 3 is a side elevation view of an alternative embodiment; and
Figure 4 is a front elevation view of the embodiment of Figure 3.

### Description of the Preferred Embodiment

As shown in the accompanying drawings, the package for home brewing comprises a pouch formed of three webs of triply material, two of which form the opposing side walls 1, 2 of the pouch and the third of which forms the base wall 3 thereof.

The webs are formed of a polyester-aluminium-polyethene laminate and are bonded together by heat sealing or use of adhesive around the lateral edges of the webs as indicated by dotted lines on the drawings.

The base wall 3 is so arranged as to provide a concave floor to the chamber of the pouch and, when the pouch is opened out from its flat pack state and filled, the bottom edges two side walls 1, 2 project downwardly to provide a substantially rigid stand for the pouch.

The nature of the laminate is such that it does not significantly crease to form shelves or other horizontal ridges to detract from the substantially sheer side walls 1, 2.

At the upper most end of the pouch is provided an opening having an outlet nozzle 4 through which water and yeast may be poured into the pouch and out through which the final beverage may be poured. A screw threaded stopper 5 is fitted to the nozzle 4.

At the other corner of the upper end of the pouch is provided a handle 6 aperture to facilitate pouring of the beverage from the pouch.

The pouch may be sold in a substantially flat form containing concentrate to be subsequently diluted at the time of adding yeast to initiate fermentation or may be filled, for example, with the single strength grape juice in the case of conventional grape wine. Most suitably the pouch has a capacity of 3 to 5 litres.

The package of the present invention greatly simplifies the home brewing procedure. Following adding of water where necessary and adding of the yeast the pack may be left to stand for the requisite number of days prior to addition of the agent for stopping and clarifying the fermentation mixture and thereafter the beverage may be decanted from the container without need for pouring into a separate decanter.

Using a standard 17 day concentrated grape juice preparation and adding yeast, agar and bentonite to initiate the fermentation followed 10 days later by adding the sodium metabisulphite to halt fermentation and allowing 7 days for the suspension to settle, the beverage is ready for pouring and drinking wihtout need for use of any other containers. This not only minimises inconvenience but also minimises introduction of any contaminants or other variants that might effect the quality of the beverage so produced.

Apparently by virtue of using an aluminium foil laminate, the need for external heating of the fermentation chamber is obviated. Accordingly, the pouch may be stored anywhere convenient during the comparatively brief fermentation process and does not need to be found a home in an airing cupboard or the like.

In an alternative aspect of the present invention there is provided a demijohn substitute which comprises a package for home brewing of an alcoholic beverage which comprises a pouch having therein a preparation to be fermented to provide the alcoholic beverage, said pouch being self-supporting to be free-standing and having a top opening with a repeatedly openable and closeable seal means to seal the opening, the pouch further having a non-return valve to relieve gas pressure from the pouch during fermentation.

Suitably the top opening is adapted for introduction of the fermentation preparation and to allow siphoning and or pouring of the contents from the pouch following fermentation.

Preferably the top opening extends across substantially the entire width of the pouch, thereby not only improving ease of construction of the pouch and access for introduction of the preparation but also facilitating flushing of the pouch interior to clean it for subsequent reuse.

The seal means is adapted to withstand a level of gas pressure build up within the pouch and suitably comprises a popper-type friction fit seal.

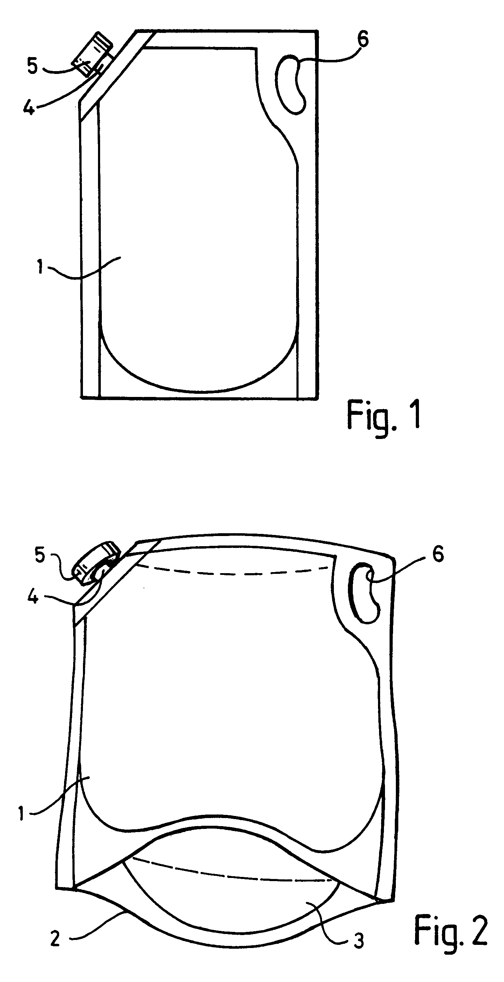

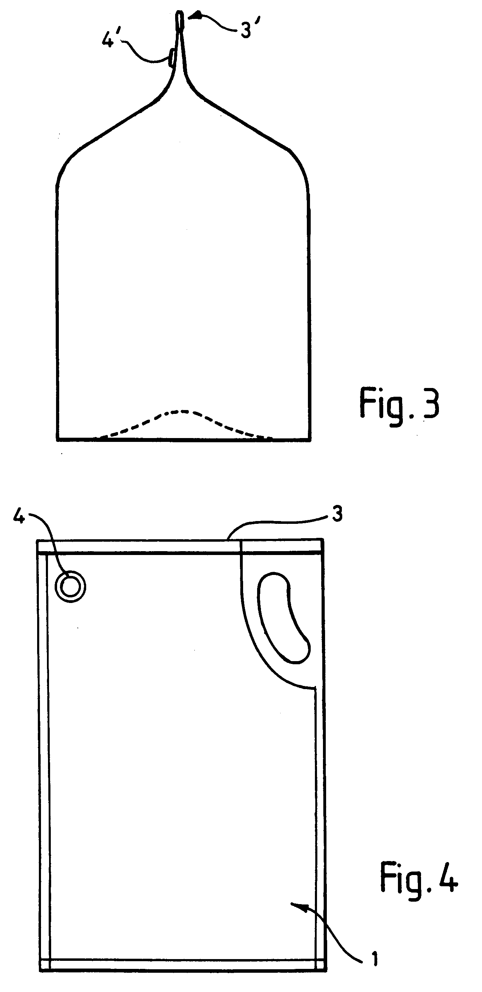

Referring to Figures 3 and 4, the pouch 1' is formed in a substantially similar manner to that of Figures 1 and 2 but instead of having a top corner opening with a venting nozzle 4, uses the entire top edge of the pouch as a repeatedly openable and closeable opening 3'. The periphery of the opening is sealed by a popper type of seal to withstand carbon dioxide pressure build up during fermentation. A non return pressure relief valve 4' is provided at the upper end of the pouch below the opening 3' to relieve the build up of carbon dioxide pressure and is welded into the fabric of the pouch.

The pouch is suitably transparent or substantially transparent and a mark on the pouch suitably indicates the fill level. To be directly compatible with the demijohn the volume of the pouch when full is suitably one gallon and marked to indicate this level.

When initiating fermentation the pouch is sealed by the seal at the opening 3'.

To stop the fermentation process fermentation stop/campden tablets are added via the re-closeable top opening and subsequently a siphoning tube can be used via the top and the wine siphoned off in the usual manner. The pouch can then be washed out, sterilised and re-used.

## Claims

1. A package for home brewing of an alcoholic beverage which comprises a pouch having therein a preparation to be fermented to provide the alcoholic beverage, said pouch being self-supporting to be free-standing and having, in use, vertical side walls which are substantially sheer.

2. A package as claimed in Claim 1, wherein the pouch is formed of a plastics material or composite.

3. A package as claimed in Claim 2, wherein the pouch is formed of two or more webs of the material or composite, which are positioned face-to-face and bonded longitudinally along their lateral edges and with a portion of at least one web, or a separate web, extending between the ends of each of the first webs to provide a base wall to support the two side walls apart and hold the pouch in a self-supporting upright configuration, in use.

4. A package as claimed in Claim 2 or Claim 3, wherein the pouch is formed of polyester.

5. A package as claimed in Claim 4, wherein the pouch is formed of a laminate of polyester, aluminium and polythene.

6. A package as claimed in any preceding Claim, wherein the pouch has a nozzle towards the upper, in use, end thereof by means of which the contents of the pouch may be poured therefrom.

7. A package substantially as herein before described with reference to any suitable combination of the accompanying drawings.

8. A demijohn substitute which comprises a package for home brewing of an alcoholic beverage which comprises a pouch having therein a preparation to be fermented to provide the alcoholic beverage, said pouch being self-supporting to be free-standing and having a top opening with a repeatedly openable and closeable seal means to seal the opening and a non-return valve to relieve gas pressure from the pouch during fermentation.

9. A demijohn substitute as claim in Claim 8, wherein the top opening is adapted for introduction of the fermentation preparation and to allow siphoning and/or pouring of the contents from the pouch following fermentation.

10. A demijohn substitute as claimed in Claim 8 or Claim ,9 wherein the top opening extends across substantially the entire width of the container.
